# EUROPÄISCHE PATENTANMELDUNG

(11) **EP 1 835 207 A1**
(43) Veröffentlichungstag der Anmeldung: **19.09.2007**
(21) Anmeldenummer: 07102215.6
(22) Anmeldetag: 13.02.2007
(51) Int. Cl.: F16J 15/44

(54) **Wellendichtung**

(30) Priorität: 14.03.2006 DE 102006011636
(71) Anmelder: Voith Patent GmbH, 89522 Heidenheim (DE)
(72) Erfinder: Gruber-Nadlinger, Thomas, 3442, Langenrohr (AT)
(74) Vertreter: Kunze, Klaus

(57) **Zusammenfassung**

Die Erfindung betrifft eine Wellendichtung zur Abdichtung eines Spaltes zwischen einem ersten umlaufenden und einem zweiten stehenden Bauteil (2, 7), oder zwischen zwei mit verschiedenen Drehzahlen umlaufenden Bauteilen. Die Wellendichtung weist einen ersten Dichtungsteil (1) und einen zweiten Dichtungsteil (5), welche zwischen sich einen Dichtspalt (8) ausbilden, auf, wobei
der erste Dichtungsteil (1) drehstarr oder im wesentlichen drehstarr an dem ersten Bauteil (2) angeschlossen oder in dieses integriert ist, und
der zweite Dichtungsteil (5) drehstarr oder im wesentlichen drehstarr an dem zweiten Bauteil (7) angeschlossen oder in dieses integriert ist.

Die Erfindung ist dadurch gekennzeichnet, dass wenigstens ein Magnetenpaar den Dichtspalt zwischen sich einschließend vorgesehen ist, von welchem ein erster Magnet (3) an dem ersten Dichtungsteil (1) angeschlossen oder in dieses integriert ist, und ein zweiter Magnet (3) an dem zweiten Dichtungsteil (5) angeschlossen oder in dieses integriert ist, so dass die beiden Magneten (3) eine anziehende oder abstoßende Kraft aufeinander und damit auf die beiden Dichtungsteile (1, 5) ausüben, und eine Vorspannungseinrichtung (6) vorgesehen ist, welche auf die beiden Dichtungsteile (1, 5) eine Vorspannungskraft entgegen der Kraft des Magnetenpaares aufbringt.

## Beschreibung

Die Erfindung betrifft eine Wellendichtung, wie sie zur Abdichtung eines Spaltes zwischen einem ersten stehenden und einem zweiten umlaufenden Bauteil oder zwischen zwei mit relativ zueinander verschiedenen Drehzahlen umlaufenden Bauteilen eingesetzt wird.

Insbesondere betrifft die vorliegende Erfindung eine Papiermaschine, das heißt eine Maschine zum Herstellen und/oder Veredeln einer Papierbahn oder anderen faserstoffhaltigen Bahn, mit einer solchen Wellendichtung.

Insbesondere in der Papierindustrie werden beispielsweise zum Abdichten von Lagerungen häufig Labyrinthdichtungen verwendet, da diese aufgrund ihrer berührungslosen Abdichtung einem vergleichsweise geringen Verschleiß unterliegen und daher sehr langlebig sind und das Risiko eines unerwarteten Ausfalls der Lagerabdichtung minimieren. Unter Labyrinthdichtungen im Sinne der folgenden Beschreibung werden dabei sowohl Volllabyrinthe, das heißt Labyrinthdichtungen mit einer Vielzahl von in Reihe geschalteten Aussparungen, in welche eine Vielzahl von in Reihe geschalteten Vorsprüngen eingreifen, als auch Teillabyrinthe, das heißt ein Dichtspalt, der wenigstens teilweise in Radialrichtung verläuft, in einer Wellendichtung zur Abdichtung in Axialrichtung, verstanden.

Solche Labyrinthdichtungen, wie sie die vorliegende Erfindung gemäß einer Ausführungsform betrifft, können dabei insbesondere einen oder mehrere der nachfolgenden physikalischen Effekte nutzen, um die Abdichtung möglichst dicht auszuführen und somit zu verhindern, dass ein flüssiges und/oder gasförmiges Medium durch die Abdichtung dringt:
- Abschleudern des Mediums an drehenden Teilen
- Rückförderung des Mediums durch Druckunterschiede
- Rückförderung des Mediums durch schneckenförmige Rückfördereinrichtungen

Je kleiner der Dichtspalt in einer Wellendichtung ist, desto kompakter und einfacher kann eine solche Dichtung bei gleichzeitig hohem Dichtungswirkungsgrad konstruiert werden.

Insbesondere bei besonders langen zu lagernden Wellen oder Walzen, wie sie beispielsweise in Papiermaschinen oder Walzwerken auftreten, beispielsweise mit einer axialen Länge der Walzen von bis zu 10 Metern oder mehr, können axiale Verlagerungen des gelagerten Wellen- beziehungsweise Walzenendes aufgrund variierender Wärmedehnung im Millimeterbereich auftreten, die die Breite des Dichtspaltes in Axialrichtung im Lager um ein vielfaches überschreiten. Bei einer Papiermaschinenwalzenlänge von bis zu 10 Metern sind beispielsweise Verschiebungen von etwa 10 Millimetern möglich. Aufgrund dieser Verschiebungen ist es häufig schwierig bis unmöglich, ausreichend dichte Wellendichtungen auszuführen, welche einen kompakten Aufbau aufweisen.

Der Erfindung liegt die Aufgabe zugrunde, eine Wellendichtung anzugeben, bei welcher ein enger Dichtspalt zum Erreichen eines einfachen und kompakten Dichtungsaufbaus in solchen Wellendichtungen ermöglicht wird, die eine vergleichsweise große axiale Verschiebung, insbesondere im Millimeterbereich, beispielsweise bis zu 10 Millimeter oder mehr, des abzudichtenden Bauteils zulassen.

Die erfindungsgemäße Aufgabe wird durch eine Wellendichtung mit den Merkmalen von Anspruch 1 gelöst. Die abhängigen Ansprüche beschreiben vorteilhafte und besonders zweckmäßige Ausgestaltungen der Erfindung.

Die Erfindung eignet sich insbesondere für Wellendichtungen in der Lagerung von Walzen in Papiermaschinen und/oder Walzwerken, da diese Walzen beispielsweise eine axiale Länge von bis zu 10 Metern oder mehr aufweisen. Insbesondere kann die erfindungsgemäße Wellendichtung in ein Axiallager (Loslager) einer solchen Walzenlagerung oder allgemein einer entsprechenden Lagerung einer drehenden Welle oder Hohlwelle integriert werden, wobei das gelagerte Ende einer erheblichen axialen Verschiebung im Millimeterbereich, beispielsweise von bis zu 10 Millimetern oder mehr, insbesondere aufgrund von thermischer Dehnung, unterliegt.

Die erfindungsgemäße Wellendichtung kann entweder zur Abdichtung eines Spaltes zwischen einem ersten stehenden und einem zweiten umlaufenden Bauteils, beispielsweise einer stehenden Lagerachse und einem umlaufenden Lagergehäuse, oder zwischen zwei mit verschiedenen Drehzahlen umlaufenden Bauteilen, das heißt das erste Bauteil läuft mit einer ersten Drehzahl und das zweite Bauteil mit einer zweiten gegenüber der ersten Drehzahl abweichenden Drehzahl um, verwendet werden.

Die Wellendichtung umfasst einen abzudichtenden Spalt, welcher insbesondere wenigstens teilweise in Radialrichtung, das heißt senkrecht oder im wesentlichen senkrecht beziehungsweise geneigt zur Drehachse verläuft. Dieser Dichtspalt wird von einem ersten Dichtungsteil zusammen mit einem zweiten Dichtungsteil eingeschlossen. Die relative Position der beiden Dichtungsteile zueinander bestimmt somit die Breite des Dichtspaltes in Axialrichtung der Wellendichtung gesehen.

Der erste Dichtungsteil ist drehstarr oder im wesentlichen drehstarr an dem ersten Bauteil angeschlossen oder in dieses integriert, und der zweite Dichtungsteil ist drehstarr oder im wesentlichen drehstarr an dem zweiten Bauteil angeschlossen oder in dieses integriert. Somit läuft der erste Dichtungsteil im wesentlichen oder vorzugsweise exakt mit der Geschwindigkeit des ersten Bauteils um, beziehungsweise wenn das ersten Bauteil stationär ist, läuft der erste Dichtungsteil ebenfalls nicht um. Der zweite Dichtungsteil läuft exakt oder im wesentlichen mit der Drehgeschwindigkeit des zweiten Bauteils um, beziehungsweise wenn das zweite Bauteil stationär ist, ist der zweite Dichtungsteil ebenfalls stationär gehalten.

Erfindungsgemäß ist wenigstens ein Magnetenpaar derart in der Wellendichtung, im Bereich der Wellendichtung oder der Wellendichtung zugeordnet vorgesehen, dass die beiden Magneten des Magnetenpaares die Breite des Dichtspaltes bestimmen oder mitbestimmen. Insbesondere schließen die beiden Magneten des Magnetenpaares den Dichtspalt zwischen sich ein. Der erste Magnet ist an dem ersten Dichtungsteil angeschlossen oder in dieses integriert, und der zweite Magnet ist an dem zweiten Dichtungsteil angeschlossen oder in diesen integriert.

Vorteilhaft sind die beiden Magneten des Magnetenpaares derart entgegengesetzt zueinander angeordnet, dass sie eine abstoßende Kraft aufeinander ausüben. Das bedeutet, gleichartige Pole der Magneten, entweder Nord-Nord oder Süd-Süd, sind einander zugewandt. Es ist jedoch auch möglich, dass die Magneten derart mit entgegengesetzt gepolten Enden einander zugewandt sind, dass sie sich gegenseitig anziehen und damit eine den Dichtspalt schließende Kraft auf die beiden Dichtungsteile ausüben.

Ferner ist erfindungsgemäß eine Vorspannungseinrichtung vorgesehen, welche auf die beiden Dichtungsteile eine Vorspannungskraft ausübt, die entgegen der anziehenden oder abstoßenden Kraft des Magnetenpaares gerichtet ist. Bei einander anziehenden Magneten bewirkt die Vorspannungskraft der Vorspannungseinrichtung demnach ein Auseinanderdrücken der beiden Dichtungsteile im Sinne eines Öffnen des Dichtspaltes. Bei sich gegenseitig abstoßend angeordneten Magneten bewirkt die Vorspannungskraft der Vorspannungseinrichtung eine Kraft in Richtung eines Zusammenrückens der beiden Dichtungsteile, das heißt im Sinne eines Schließens des Dichtspaltes.

Die erfindungsgemäße Wellendichtung weist demnach zwei entgegengesetzt wirkende Kraftquellen auf, welche die beiden Dichtungsteile auf einem vorbestimmten Abstand zueinander halten, so dass zwischen den beiden Dichtungsteilen ein Dichtspalt mit einem vorbestimmten Ausmaß gebildet wird.

Gemäß einer vorteilhaften Ausführungsform umfasst die Vorspannungseinrichtung ein mechanisches Druck- oder Zugelement, insbesondere eine Druckfeder beziehungsweise eine Vielzahl hiervon, welche entgegen der Kraft von dem Magnetenpaar oder einer Vielzahl desselben, welches/welche insbesondere den Dichtspalt einschließt/einschließen, entgegenwirkt/entgegenwirken. Die Magneten können als Dauermagneten und/oder als elektromagnetische Spulen ausgeführt sein. Gemäß einer alternativen Ausführungsform ist auch die Kraft der Vorspannungseinrichtung eine Magnetkraft, das heißt die Vorspannungseinrichtung wird durch wenigstens einen Magneten beziehungsweise ein Magnetenpaar oder eine Vielzahl hiervon gebildet.

Der Dichtspalt kann in Form eines Teillabyrinthes oder eines Volllabyrinthes ausgeführt sein. Ein Beispiel für jede dieser Ausführungen wird später mit Bezug auf die Figuren beschrieben werden.

Die mittels der erfindungsgemäßen Wellendichtung gegeneinander abzudichtenden Bauteile können beispielsweise eine stehende Achse und eine um diese umlaufende Hohlwelle beziehungsweise ein um diese umlaufendes Gehäuse sein. Beispielsweise kann die Wellendichtung Teil eines Lagers beziehungsweise einer Lagerung einer Walze einer Papiermaschine oder eines Walzwerks sein. Alternativ kann auch eine umlaufende Welle, die insbesondere als Vollwelle ausgebildet ist, gegenüber einem stationären Bauteil wie einem Gehäuse oder einem Ständer mittels der erfindungsgemäßen Wellendichtung abgedichtet werden.

Die beiden Dichtungsteile, das Magnetenpaar und die Vorspannungseinrichtung können beispielsweise derart angeordnet und dimensioniert sein, dass der Dichtspalt in jedem Betriebszustand auf maximal 1 mm begrenzt wird, insbesondere ein Ausmaß von mehr als 0 mm und weniger als oder bis zu 1 mm aufweist. Dabei kann der Dichtspalt gemäß einer Ausführungsform stets konstant gehalten werden.

Die beiden Dichtungsteile können beispielsweise in Form von konzentrischen Ringen ausgeführt sein, und das Magnetenpaar kann zwei ringförmige Magneten oder eine Vielzahl von in einer Ringform angeordneten Magneten aufweisen. Die Magnete können beispielsweise Dauermagnete sein.

Um eine regelbare beziehungsweise schaltbare Magnetkraft zu erzeugen, kann das Magnetenpaar Elektromagneten, insbesondere Spulen, umfassen beziehungsweise hieraus bestehen. Zusätzlich oder alternativ können Elektromagnete zusätzlich zu dem Magnetenpaar vorgesehen sein, welche entweder eine gleichgerichtete Kraft wie das Magnetenpaar oder eine entgegengesetzt hierzu gerichtete Kraft auf die beiden Dichtungsteile ausüben, um die Dichtspaltbreite beziehungsweise das Dichtspaltausmaß variabel beziehungsweise regelbar einzustellen.

Wenn das Magnetenpaar einen abschaltbaren elektromagnetischen Magneten umfasst, ist es möglich, den Dichtspalt im Stillstand beider Bauteile beziehungsweise bei einer kleinen relativen Drehzahl derselben im wesentlichen oder vollständig zu schließen. Eine solche berührende Abdichtung des Spaltes ermöglicht, ein Austreten von durch die Dichtung zurückzuhaltendem Medium, beispielsweise Öl, sicher zu verhindern. Im Stillstand kommt es nämlich gelegentlich vor, dass Öl aus berührungslosen Dichtungen läuft, weil das häufig vorgesehene Zurückschleudern des Mediums an rotierenden Abspritzkanten im Stillstand nicht funktioniert. Gemäß einer besonderen Ausführungsform kann auch zusätzlich zu der berührungslosen Dichtung eine berührende Dichtung, zum Beispiel axial beziehungsweise radial abdichtende Wellendichtringe, O-Ringe und dergleichen, vorgesehen sein, die den Dichtspalt im Stillstand beider Bauteile beziehungsweise bei einer kleinen Relativdrehzahl derselben berührend abdichtet. Insbesondere können dabei Maßnahmen getroffen werden, damit die berührende Dichtung sofort beim Anfahren oder bereits bei kleiner Relativdrehzahl "abhebt", so dass sie keinem oder im wesentlichen keinem Verschleiß unterliegt.

Wenn ein oder mehrere elektromagnetische Magneten, beispielsweise Spulen, vorgesehen sind, können diese gemäß einer Ausführungsform an einem Generator angeschlossen sein, welcher den Erregerstrom für die Elektromagneten erzeugt. Der Rotor des Generators kann beispielsweise mit der Drehzahl des umlaufenden Bauteils oder in Abhängigkeit von dieser Drehzahl umlaufen, um so die Magnetkraft des Elektromagneten in Abhängigkeit der Drehzahl des umlaufenden Bauteils automatisch zu regeln. Insbesondere kann ein solcher Generator in die Wellendichtung selbst integriert werden, oder dessen Rotor mechanisch beziehungsweise drehstarr an dem umlaufenden Bauteil angeschlossen werden.

Gemäß einer bisher noch nicht beschriebenen Ausführung ist die Vorspannungseinrichtung derart ausgeführt, dass sie eine ausdehnungsunabhängige Vorspannungskraft ausübt. Beispielsweise kann die Vorspannungseinrichtung eine pneumatische und/oder hydraulische Anpresseinrichtung mit wegunabhängiger, gleichbleibender Anpresskraft umfassen.

Die Magneten des Magnetenpaares oder weitere Magneten können entweder derart in der Wellendichtung angeordnet werden, dass ein Anziehen magnetischer Partikel, wie zum Beispiel Eisenspäne, aus dem an der Wellendichtung anstehenden Medium vermieden wird. Gemäß einer alternativen Ausführungsform können die Magneten jedoch derart vorgesehen werden, dass gezielt magnetische Partikel aus dem anstehenden Medium angezogen werden und sich im Bereich der oder auf den Magneten ablagern. Die angezogenen Partikel können dann im Rahmen einer Wartung regelmäßig entfernt werden. Vorteilhaft sind die Magneten jedoch derart positioniert, dass sich im Bereich des Dichtspaltes keinerlei magnetische Partikel ablagern, um das Ausmaß des Dichtspaltes nicht ungewollt zu verändern.

Die Erfindung ist nicht auf berührungslose Dichtungen beschränkt. Vielmehr kann die Einstellung des Dichtspaltes auch einen Dichtspalt zwischen berührenden Dichtungsteilen betreffen. Beispielsweise können die beiden Bauteile durch das erfindungsgemäß vorgesehene Magnetenpaar in Kombination mit der Vorspannungseinrichtung auf einem vorgegebenen Abstand zueinander gehalten werden, bei welchem die beiden Dichtungsteile gerade einen Nullspalt zwischen sich ausbilden, ohne dass durch ein Stauchen der beiden Dichtungsteile gegeneinander, beispielsweise bei Vorsehen von flexiblen Dichtlippen, ein erhöhter Verschleiß auftritt. Im allgemeinen kann der Dichtspalt eine beliebige Form aufweisen, zum Beispiel eine spitz zulaufende oder sonstige geschwungene Form aufweisen, und muss nicht zwangsläufig parallel verlaufen. Insbesondere wird der Dichtspalt jedoch durch das erfindungsgemäß vorgesehene Magnetenpaar in Kombination mit der Vorspannungseinrichtung in einer konstanten oder im wesentlichen konstanten Form gehalten.

Insofern die Gefahr besteht, dass eines oder die beiden Dichtungsteile beziehungsweise die beiden gegeneinander abzudichtenden Bauteile einer Schwingung unterliegen, kann eine Dämpfung beispielsweise in Form von Dämpfungselementen vorgesehen sein. Eine solche Dämpfung kann auf das erste Bauteil beziehungsweise das erste Dichtungsteil und/oder das zweite Bauteil beziehungsweise das zweite Dichtungsteil derart wirken, dass eine schwingende Bewegung dieses Teils gedämpft wird.

Die Erfindung soll nachfolgend anhand von drei Ausführungsbeispielen exemplarisch beschrieben werden.

### Es zeigen:

- Figur 1: eine teilweise geschnittene Ansicht eines Ausschnittes einer ersten Ausführungsform einer erfindungsgemäß ausgeführten Wellendichtung;
- Figur 2: einen teilweisen Ausschnitt in teilweise geschnittener Darstellung einer zweiten Ausführungsform;
- Figur 3: eine teilweise geschnittene Ansicht einer dritten Ausführungsform mit einem Pendelrollenlager.

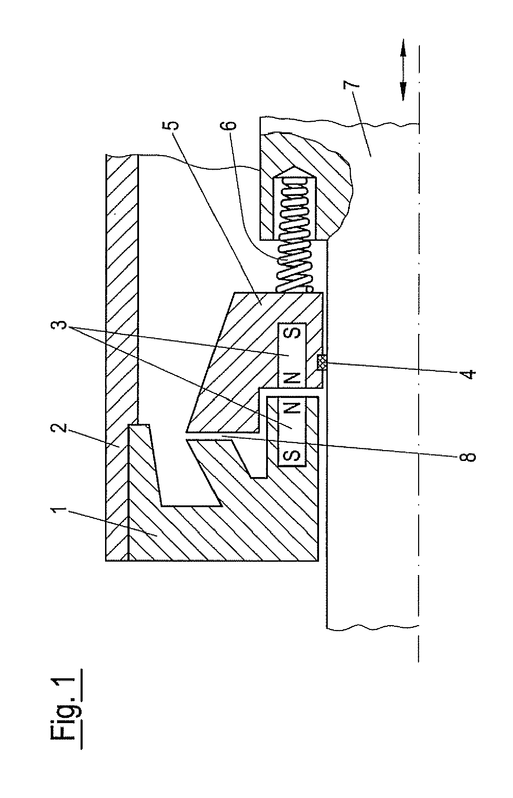

In der Figur 1 erkennt man ein erstes Bauteil 2 in Form eines umlaufenden Gehäuses und ein zweites Bauteil 7 in Form einer feststehenden Welle. Die beiden Bauteile 2, 7 sollen gegeneinander mittels einer erfindungsgemäß ausgeführten Wellendichtung gegen Austreten eines flüssigen Mediums abgedichtet werden.

Die Wellendichtung umfasst einen ersten Dichtungsteil 1 in Form eines Ringes und einen zweiten Dichtungsteil 5 ebenfalls in Form eines Ringes. Die beiden Dichtungsteile 1, 5 bilden zwischen sich eine berührungslose Spaltdichtung mit einem Dichtspalt 8 aus.

Der erste Dichtungsteil 1 ist fest mit dem umlaufenden Bauteil 2 verbunden und dreht sich somit um das stehende Bauteil 7.

Das zweite Bauteil 7 und/oder das erste Bauteil 2 kann beispielsweise aufgrund von Wärmedehnungen in Axialrichtung um mehrere Millimeter verschoben werden, siehe den Doppelpfeil. Trotz dieser axialen Verschiebung soll die Wellendichtung den Dichtspalt 8 gering und insbesondere konstant oder im wesentlichen konstant halten.

Der zweite Dichtungsteil 5 ist hierzu axial gleitbar auf dem zweiten, stehenden Bauteil 7 gelagert und wird durch eine Vorspannungseinrichtung 6, hier in Form einer Vielzahl von in Umfangsrichtung angeordneten Druckfedern mit vergleichsweise flacher Kennlinie in Richtung des ersten Dichtungsteils 1 gedrückt.

Um eine noch bessere Abdichtung zu erreichen, ist zwischen dem zweiten Dichtungsteil 5 und dem zweiten, stehenden Bauteil 7 eine Gleitringdichtung 4 eingebracht, was jedoch nicht unbedingt notwendig ist.

Um einen Kontakt der beiden Dichtringe, das heißt des ersten Dichtungsteils 1 und des zweiten Dichtungsteils 5 zu vermeiden, ist ein Magnetenpaar, hier bestehend aus zwei ringförmigen Dauermagneten 3 derart angeordnet beidseits des Dichtspaltes 8 in den beiden Dichtungsteilen 1, 5 vorgesehen, dass gleichartige Pole der Magneten, hier die beiden Nordpole entgegengesetzt und einander gegenüberstehend angeordnet sind. Die abstoßende Wirkung der Magnetfelder hält die beiden Dichtringe auf Distanz. Bei einer entsprechend steilen Kennlinie der verwendeten Magneten 3 wird im Sinne eines Schließens des Dichtspaltes 8 auf den letzten Zehntel Millimetern eine sehr hohe abstoßende Kraft produziert, die ein gewisses Mindestdichtspaltmaß garantiert und bei etwas größeren Abständen (einige Zehntel mehr) sehr stark abfällt, um die Vorspannungskraft der Vorspannungseinrichtung 6 gering ausführen zu können.

Damit eine gleichbleibende Anpresskraft durch die Vorspannungseinrichtung 6 auch bei größeren Verschiebungen der Welle beziehungsweise hier des feststehenden Bauteils 7 gewährleistet ist, kann an Stelle der gezeigten Druckfedern auch eine hydraulische und/oder pneumatische Vorspannungseinrichtung 6 vorgesehen sein, insbesondere mit wegunabhängiger, gleichbleibender Anpresskraft.

Wie dargelegt, können die Dauermagnete durch elektrische Spulen beziehungsweise Elektromagnete ersetzt werden, welche ein entsprechendes Magnetfeld erzeugen. Durch Abschalten dieser Spulen im Stillstand kann eine berührende Abdichtung des Dichtspaltes 8 erreicht werden, um ein Austreten von Medium zuverlässig zu verhindern.

Selbstverständlich ist es möglich an Stelle des gezeigten einzigen Magnetenpaares mit genau zwei Magneten 3 eine Vielzahl von Magnetenpaaren vorzusehen, die vorzugsweise parallel zueinander geschaltet sind. Beispielsweise könnte im Bereich des Dichtspaltes 8, in welchem in der Figur 1 die Linie des Bezugszeichens 8 endet, ein zweites Paar von Ringmagneten vorgesehen sein. An Stelle von jeweils einem Paar von Ringmagneten können auch eine Vielzahl von in Umfangsrichtung verteilten Magnetenpaaren an der gezeigten sowie der soeben beschriebenen oder einer anderen Position vorgesehen sein.

Wie man in der Figur 1 erkennen kann, verläuft der Dichtspalt 8 in Richtung vom ersten umlaufenden Bauteil 2 zum zweiten stehenden Bauteil 7 zunächst ausschließlich radial von außen nach innen, anschließend konzentrisch zur Drehachse, anschließend wieder radial von außen nach innen bis auf die Welle des zweiten Bauteils 7 und schließlich entlang der Oberfläche der Welle, konzentrisch zur Drehachse, jedoch in entgegengesetzter Richtung zu dem vorherigen konzentrischen Abschnitt.

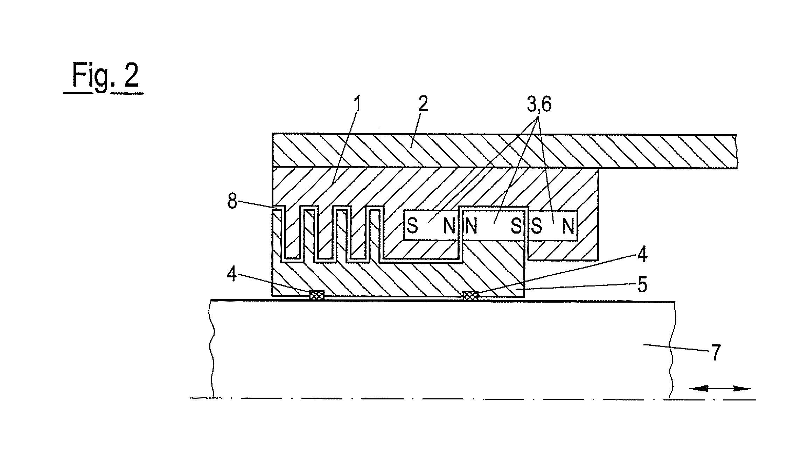

Bei der in der Figur 2 gezeigten Ausführung weisen die den Bauteilen in der Figur 1 entsprechenden Bauteile dieselben Bezugszeichen auf. Diesmal ist der Dichtspalt 8 in Form eines Volllabyrinthes ausgeführt, das heißt er verläuft mäanderförmig in axialer Richtung.

Gemäß dieser Ausführung sind drei Magneten 3 vorgesehen, welche hinsichtlich ihrer Wirkung zwei Magnetenpaare ausbilden. Die drei Magneten 3 sind dabei vorliegend in Form von Ringmagneten ausgeführt, die miteinander fluchten und konzentrisch zur Drehachse angeordnet sind. An Stelle von einstückigen ringförmigen Magneten kann auch eine Vielzahl von in Umfangsrichtung angeordneten Magneten vorgesehen sein.

Die drei Magneten 3 weisen zwei axiale äußere Magneten mit gleichwirkender magnetischer Ausrichtung auf, welche einen mittleren Magneten mit entgegengesetzter magnetischer Ausrichtung, das heißt der hinsichtlich seiner Pole spiegelbildlich zu den beiden äußeren Magneten angeordnet ist, in Axialrichtung zwischen sich einschließen. Der mittlere Magnet 3 bildet sowohl ein Magnetenpaar mit dem ersten axial äußeren Magneten 3 als auch ein Magnetenpaar mit dem entgegengesetzten zweiten axial äußeren Magneten 3 aus. Dabei üben die Magneten eines jeden Magnetenpaares aufgrund der Anordnung der Pole jeweils eine abstoßende magnetische Kraft aufeinander aus. Der mittlere Magnet 3 wird somit von beiden äußeren Magneten 3 abgestoßen und dadurch in einem vorteilhaft konstanten Abstand gegenüber beiden äußeren Magneten 3 gehalten.

Die beiden axial äußeren Magneten 3 sind in den ersten Dichtungsteil 1 integriert oder an diesem angeschlossen, wohingegen der mittlere, von den genannten äußeren Magneten abgestoßene Magnet 3 in dem zweiten Dichtungsteil 5 integriert beziehungsweise an dieses angeschlossen ist.

Der Dichtspalt 8 verläuft durch beide Magnetenpaare, das heißt er wird durch die beschriebenen Magneten 3 beider Magnetenpaare beidseitig eingeschlossen.

Aufgrund der gezeigten Anordnung wird die Vorspannungseinrichtung 6 durch die Magneten 3 der Magnetenpaare ausgebildet, so dass auf eine weitere externe Vorspannungseinrichtung verzichtet werden kann, da der zweite Dichtungsteil 5 mit seinem Magneten 3 derart durch den ersten Dichtungsteil 1 mit seinen Magneten 3 eingeschlossen wird, dass seine Bewegung in Axialrichtung allein durch die magnetischen Kräfte begrenzt wird.

Selbstverständlich ist es auch möglich, die Magnetenpaare, das heißt die drei Magneten 3, derart anzuordnen, dass sie über dem Dichtspalt 8 jeweils eine anziehende magnetische Kraft aufeinander ausüben, welche den mittleren Magneten 3 auf einem konstanten Abstand gegenüber beiden äußeren Magneten 3 hält. Das Vorsehen von abstoßenden magnetischen Kräften führt jedoch in der Regel zu einer stabileren berührungslosen Dichtung.

Selbstverständlich können auch alternativ oder zusätzlich zu den gezeigten Magneten 3 der in der Figur 2 gezeigten Ausführung Elektromagneten vorgesehen werden, oder zusätzliche Dauermagneten können eingebracht werden, beispielsweise im Bereich des links in der Figur 2 dargestellten mäanderförmigen Verlaufes des Dichtspaltes 8.

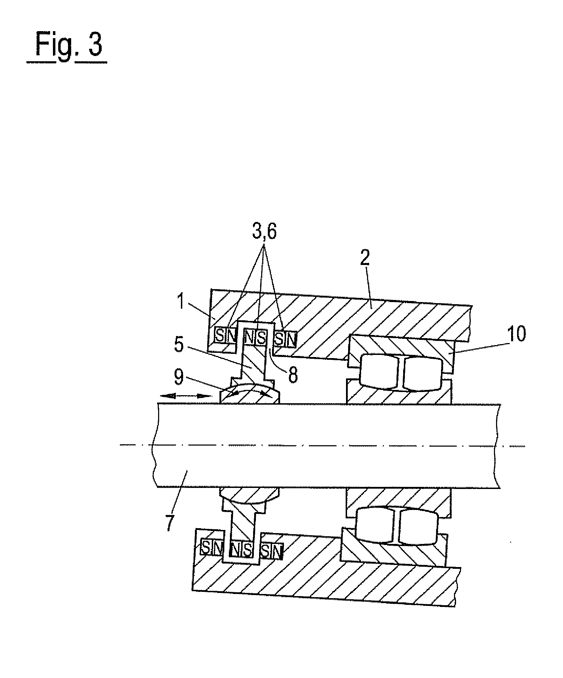

In der Figur 3 erkennt man eine weitere Ausführungsform gemäß der vorliegenden Erfindung. Das umlaufende Bauteil 2 in Form eines umlaufenden Gehäuses ist aufgrund der Durchbiegung der angeschlossenen Walze (nicht gezeigt), welche das Gehäuse 2 ausbildet, gegenüber dem zweiten Bauteil 7 in Form einer feststehenden Welle schräggestellt. Hierzu kann das Lager 10 beispielsweise als Pendelrollenlager ausgeführt sein, damit die Durchbiegung der Walze das Lager nicht belastet, da es sich entsprechend der Schrägstellung ausrichten kann.

Die Schrägstellung führt jedoch dazu, dass der erste Dichtungsteil 1, welcher durch das erste Bauteil 2 gebildet wird, gegenüber dem zweiten Dichtungsteil 5, welcher durch das zweite Bauteil 7 getragen wird, verkippt, insofern der zweite Dichtungsteil 5 der Schrägstellung des ersten Dichtungsteils 1 nicht folgen kann. Um diese Relativschrägstellung des einen gegenüber dem anderen Dichtungsteil zu vermeiden, ist vorliegend der zweite Dichtungsteil 5 kippbar in Längsrichtung des zweiten Bauteils 7 gelagert, siehe den Doppelpfeil. Beispielsweise kann eine kardanische oder sphärische (kugelige) Lagerung vorgesehen sein.

Obwohl in der gezeigten Ausführung der Dichtspalt 8 in Form einer Labyrinthdichtung mit dem zweiten Dichtungsteil 5 in Form einer einzigen kippbar auf der feststehenden Welle vorgesehenen Scheibe ausgeführt ist, können alternativ eine Vielzahl von hintereinander in Axialrichtung gesehen auf der Welle angeordnete Scheiben vorgesehen sein, um eine entsprechende Labyrinthdichtung (oder auch andere Dichtungsform) auszubilden.

Aufgrund der gezeigten Anordnung von Magneten 3, welche vorliegend entsprechend der Figur 2 wiederum in Form von zwei Magnetenpaaren mit drei Ringmagneten 3 ausgeführt sind, und welche zugleich die Vorspannungseinrichtung 6 ausbilden, wird die Scheibe des zweiten Dichtungsteils 5 in einem gleichmäßigen beidseitigen Abstand gegenüber dem ersten Dichtungsteil 1 gehalten und folgt einer möglichen Kippbewegung des ersten Dichtungsteils 1.

Bei Vorsehen einer Vielzahl von auf der stehenden Welle hintereinander angeordneten Scheiben, können diese entweder jeweils unabhängig voneinander hinsichtlich einer Kippbewegung auf der Welle gelagert sein und über entsprechende Magnetenpaare in dem gewünschten Abstand zu dem ersten Dichtungsteil gehalten werden, oder mit einem Magnetenpaar können eine Vielzahl von entsprechend starr oder mechanisch aneinander angeschlossenen Scheiben gehalten werden. Insbesondere können mit zwei Magnetenpaaren, welche gemäß der Figur 3 angeordnet sind und aus drei Einzelmagneten bestehen, sämtliche Scheiben auf der Welle in dem gewünschten Abstand zum ersten Dichtungsteil 1 gehalten werden, um eine gewünschte Dichtung auszubilden.

Man könnte die in der Figur 3 gezeigte Lagerung des zweiten Dichtungsteils 5 auch als schwimmend bezeichnen.

Damit die in der Figur 3 gezeigte Abdichtung nicht schwingen kann, besteht zusätzlich die Möglichkeit, die Bewegung der Scheibe entsprechend zu dämpfen. Eine solche Dämpfung kann generell auch bei axial verschiebbaren Magnetabdichtungen von Vorteil sein. Dem Fachmann werden geeignete Dämpfungselemente zur Verfügung stehen, welche vorliegend im einzelnen nicht gezeigt werden.

## Patentansprüche

1. Wellendichtung zur Abdichtung eines Spaltes zwischen einem ersten umlaufenden und einem zweiten stehenden Bauteil (2, 7), oder zwischen zwei mit verschiedenen Drehzahlen umlaufenden Bauteilen;
mit einem ersten Dichtungsteil (1) und einem zweiten Dichtungsteil (5), welche zwischen sich einen Dichtspalt (8) ausbilden, wobei
der erste Dichtungsteil (1) drehstarr oder im wesentlichen drehstarr an dem ersten Bauteil (2) angeschlossen oder in dieses integriert ist, und
der zweite Dichtungsteil (5) drehstarr oder im wesentlichen drehstarr an dem zweiten Bauteil (7) angeschlossen oder in dieses integriert ist;
**dadurch gekennzeichnet, dass**
wenigstens ein Magnetenpaar die Breite des Dichtspaltes (8) einstellend vorgesehen ist, von welchem ein erster Magnet (3) an dem ersten Dichtungsteil (1) angeschlossen oder in dieses integriert ist, und ein zweiter Magnet (3) an dem zweiten Dichtungsteil (5) angeschlossen oder in dieses integriert ist, so dass die beiden Magneten (3) eine anziehende oder abstoßende Kraft aufeinander und damit auf die beiden Dichtungsteile (1, 5) ausüben, und
eine Vorspannungseinrichtung (6) vorgesehen ist, welche auf die beiden Dichtungsteile (1, 5) eine Vorspannungskraft entgegen der Kraft des Magnetenpaares aufbringt.

2. Wellendichtung gemäß Anspruch 1, **dadurch gekennzeichnet, dass** das Magnetenpaar den Dichtspalt (8) zwischen sich einschließt.

3. Wellendichtung gemäß einem der Ansprüche 1 oder 2, **dadurch gekennzeichnet, dass** die beiden Dichtungsteile (1, 5) zwischen sich einen labyrinthförmigen oder teillabyrinthförmigen Dichtspalt (8) ausbilden.

4. Wellendichtung gemäß einem der Ansprüche 1 bis 3, **dadurch gekennzeichnet, dass** die Vorspannungseinrichtung (6) eine Feder, insbesondere Druckfeder, oder eine Vielzahl derselben umfasst.

5. Wellendichtung gemäß einem der Ansprüche 1 bis 4, **dadurch gekennzeichnet, dass** die beiden Bauteile (2, 7) eine stehende Achse und eine um diese umlaufende Hohlwelle, oder eine umlaufende Welle, insbesondere Vollwelle, und ein die Welle tragendes stehendes Gehäuse oder einen die Welle tragenden stehenden Ständer umfassen, und die beiden Bauteile (2, 7) relativ zueinander axial verlagerbar, insbesondere aufgrund thermischer Dehnung, angeordnet sind, wobei das Ausmaß der relativen Verlagerung insbesondere ein Vielfaches der Breite des Dichtspaltes (8) in Axialrichtung der Bauteile (2, 7) beträgt, beispielsweise im Bereich von bis zu 20 Millimeter liegt oder zwischen 5 und 15, insbesondere 10 Millimeter beträgt.

6. Wellendichtung gemäß Anspruch 5, **dadurch gekennzeichnet, dass** die Welle oder die Hohlwelle Bauteil einer Papiermaschine ist, insbesondere der Lagerung einer Papiermaschinenwalze.

7. Wellendichtung gemäß einem der Ansprüche 1 bis 6, **dadurch gekennzeichnet, dass** der Dichtspalt (8) durch Anordnung und Dimensionierung der Dichtungsteile (1, 5), des Magnetenpaares und der Vorspannungseinrichtung (6) auf maximal einen Millimeter begrenzt wird, insbesondere im Bereich von größer als 0 bis zu 1 Millimeter gehalten wird.

8. Wellendichtung gemäß einem der Ansprüche 1 bis 7, **dadurch gekennzeichnet, dass** die beiden Dichtungsteile (1, 5) in Form von konzentrischen Ringen ausgeführt sind, und das Magnetenpaar insbesondere zwei ringförmige Magneten (3), insbesondere Dauermagneten, oder jeweils eine Vielzahl von ringförmig angeordneten Magneten, insbesondere konzentrisch zur Drehachse, umfasst.

9. Wellendichtung gemäß einem der Ansprüche 1 bis 8, **dadurch gekennzeichnet, dass** die beiden Magneten (3) derart zueinander angeordnet sind, dass sich gleichartige Pole, Nord-Nord oder Süd-Süd, gegenüberstehen.

10. Wellendichtung gemäß Anspruch 9, **dadurch gekennzeichnet, dass** die beiden Magneten (3) eine stark abnehmende Kennlinie der abstoßenden Kraft über dem Abstand zueinander aufweisen, so dass mit abnehmendem Abstand die abstoßende Kraft zunimmt.

11. Wellendichtung gemäß einem der Ansprüche 1 bis 10, **dadurch gekennzeichnet, dass** die Vorspannungseinrichtung (6) eine ausdehnungsunabhängige Vorspannungskraft aufweist.

12. Wellendichtung gemäß einem der Ansprüche 1 bis 11, **dadurch gekennzeichnet, dass** eine Vielzahl von gleichwirkenden Magnetenpaaren, insbesondere in Axialrichtung der Bauteile (2, 7) seriell hintereinander angeordnet, vorgesehen sind.

13. Wellendichtung gemäß einem der Ansprüche 1 bis 12, **dadurch gekennzeichnet, dass** die Vorspannungseinrichtung (6) durch ein zusätzliches Magnetenpaar oder einen zusätzlichen Magneten, der mit einem der beiden Magneten des Magnetenpaares ein zusätzliches Magnetenpaar bildet, oder durch eine Vielzahl von zusätzlichen Magnetenpaaren mit einer Kraftwirkungsrichtung entgegengesetzt der Kraftwirkungsrichtung des genannten, insbesondere den Dichtspalt (8) umschließenden Magnetenpaares gebildet wird.

14. Wellendichtung gemäß einem der Ansprüche 1 bis 13, **dadurch gekennzeichnet, dass** das Magnetenpaar wenigstens einen abschaltbaren elektromagnetischen Magneten umfasst, um den Dichtspalt (8) durch Abschalten der Magnetkraft im Stillstand beider Bauteile (2, 7) oder innerhalb von einem vorgegebenen relativen Drehzahlbereich beider Bauteile (2, 7) mittels der Vorspannungseinrichtung (6) zu schließen.

15. Wellendichtung gemäß einem der Ansprüche 1 bis 14, **dadurch gekennzeichnet, dass** das Magnetenpaar wenigstens einen in seiner Magnetkraft regelbaren elektromagnetischen Magneten umfasst, um durch variables Einstellen der Magnetkraft die Ausdehnung des Dichtspaltes (8), insbesondere in Abhängigkeit der Relativdrehzahl zwischen den beiden Bauteilen (2, 7) zu ändern und/oder zu schließen, letzteres insbesondere durch Umkehr der Polarität des Magneten.

16. Wellendichtung gemäß Anspruch 15, **dadurch gekennzeichnet, dass** der elektromagnetische Magnet an einem Generator angeschlossen ist, dessen Rotor mit der Drehzahl des umlaufenden Bauteils (2) oder in Abhängigkeit dieser Drehzahl umläuft, um so die Magnetkraft in Abhängigkeit der Drehzahl automatisch zu regeln, wobei der Generator insbesondere in die Wellendichtung integriert oder sein Rotor drehstarr an dem umlaufenden Bauteil (2) angeschlossen oder in dieses integriert ist.

17. Wellendichtung gemäß einem der Ansprüche 1 bis 16, **dadurch gekennzeichnet, dass** wenigstens eines der beiden Dichtungsteile (1, 5) ein in einer Axialschnittebene durch die Drehachse bewegliches, insbesondere kippbares und/oder verschiebbares Element aufweist, dass durch das wenigstens ein Magnetenpaar und die Vorspannungseinrichtung (6) in einem vorgegebenen Abstand zu dem anderen Dichtungsteil gehalten wird, insbesondere ungeachtet von einer Bewegung, insbesondere Kipp- und/oder Verschiebebewegung des anderen Dichtungsteils.

18. Papiermaschine, umfassend eine umlaufende Welle, insbesondere Hohlwelle, die mit einer Wellendichtung gemäß einem der Ansprüche 1 bis 17 gegenüber einem stationären Bauteil oder einem mit abweichender Drehzahl umlaufenden Bauteil, insbesondere einer von der Hohlwelle umschlossenen Achse, abgedichtet ist.
